# EUROPEAN PATENT SPECIFICATION

(11) **EP 3 463 749 B1**
(45) Date of publication and mention of the grant of the patent: **27.07.2022**
(21) Application number: 17728171.4
(22) Date of filing: 01.06.2017
(51) Int. Cl.: B24B 7/18, B24B 55/12

(54) **FLOOR GRINDING MACHINE, METHOD OF OPERATING FLOOR GRINDING MACHINE**
BODENSCHLEIFMASCHINE, VERFAHREN ZUM BETRIEB EINER BODENSCHLEIFMASCHINE
MACHINE DE MEULAGE DE SOL, PROCÉDÉ DE FONCTIONNEMENT DE MACHINE DE MEULAGE DE SOL

(30) Priority: 03.06.2016 SE 1650788
(43) Date of publication of application: 10.04.2019
(73) Proprietor: Husqvarna AB, 561 82 Huskvarna (SE)
(72) Inventor: FOGELBERG, Andreas, 614 92 Söderköping (SE)
(74) Representative: Johansson, Fredrik Kristofer
(86) International application number: PCT/EP2017/063375
(87) International publication number: WO 2017/207723

(56) References cited:
- WO-A1-03/076131
- DE-U1-202015 100 403
- GB-A- 2 232 367
- US-A- 5 605 493
- US-A1- 2011 099 748

## Description

### Technical field

The present disclosure relates to floor grinding machines, and in particular to floor grinding machines adapted for grinding floors of stone or stone-like materials, such as limestone, sandstone, marble, slate, granite, concrete or terrazzo.

### Background

Floor grinding machines are known and used in polishing or grinding floor surfaces, either with the purpose of producing a level and/or glossy floor surface, or with the purpose of renovating such a surface which has deteriorated due to e.g. wear, or which has been damaged.

A floor grinding machine for this type of grinding typically comprises a machine frame, which carries a motor that is operatively connected to a grinding head. An example of such floor grinding machine is disclosed in WO03/076131 A1 which document forms the basis for the preamble of claim 1 and claim 13.

In a particular class of floor grinding machines, such a grinding head may be rotatable relative to the machine frame. The grinding head may carry a plurality of grinding disks, each of which may be rotatable relative to the grinding head. Such a grinding head is typically referred to as a planetary type grinding head.

These floor grinding machines are usually equipped with grinding elements in the form of bonded abrasives, i.e. abrasives in the form of a three-dimensional body comprising abrasive particles and a matrix material, which may be a polymer material or a metallic material. As another option, the machines may be equipped with cutting elements, adapted, for example for removal of glue, paint, lacquer or other surface treatments from a floor surface.

The machine may typically be supported by its grinding head and often also by a pair of wheels, which may be arranged behind the grinding head, as seen in a forward direction of the machine. Optionally, the machine may also be supported by one or more further wheels, which may be used to control the pressure exerted by the grinding head on the floor.

The pair of wheels may be driven. Optionally, they may be individually drivable, such that a direction of travel of the machine may be controlled.

The floor grinding machine may comprise a water feeding device. The floor grinding machine may also comprise a water spay device for wetting the surface to be grinded or polished and/or for cooling down the grinding head.

One example of a known machine of this type is disclosed in WO03076131A1.

Grinding floors of stone or stone-like materials, such as limestone, sandstone, marble, slate, granite, concrete or terrazzo, generates grinding residues, such as dust, particles and small portions of the floor material. Some residues, especially those in the form of very small particles, and especially when grinding using water, may attach to the grinding machine, especially on an inside of a grinding head hood, which encloses the grinding head. In particular, the residues may build up to form essentially a block of concrete or cement. The presence of such residues may also negatively influence the heat dissipation, the rotation of the grinding disks, and may thus degrade the grinding efficiency of the machine. In addition, it may add to the weight of the machine, and thus affect its balancing.

Cleaning the machine will thus be essential. However, such cleaning may be difficult in cases where large chunks of residues have formed. There is a risk that the cleaning process, which may involve use of a hammer and chisel, may damage the machine.

Thus, there is a need for a floor grinding machine which is easier to clean.

Therefore, there remains a need for an improved floor grinding machine, which can at least partly alleviate at least some of the above-mentioned drawbacks.

### Summary

An object of the present disclosure is to provide an improved floor grinding machine for grinding floor surfaces of stone or stone-like materials.

A particular object is to provide a floor grinding machine which is easier to clean.

The invention is defined by the appended independent claims, with embodiments being set forth in the appended dependent claims in the following description and in the attached drawings.

According to a first aspect, there is provided a floor grinding machine for grinding floor surfaces of stone or stone-like material, the machine comprising: a machine frame, a grinding head, supported by and being rotatable relative to the machine frame, a grinding head hood, which defines a space in which the grinding head is rotatable, a resilient member, and a pressurized fluid source, operatively connected to the resilient member to supply said pressurized fluid, whereby the resilient member, or a portion thereof, is resiliently movable or expandable upon supply of said fluid, enabling grinding residues accumulated on or in a vicinity of the resilient member to be released upon supply of said pressurized fluid.

The accumulated grinding residues can firmly attach to the inside of the hood over time, which are difficult to clean. Thus, a frequent cleaning is needed to remove these residues. However, it is difficult to remove those residues between the grinding head casing and the hood without separating the hood and the casing by e.g. disassembling.

By expanding the hollow member inside the hood, the grinding residues accumulated, being attached to and/or being closed to the hollow member, can be easily removed. Thus, such a floor grinding machine is easy to clean. And less effort is needed for frequent cleanings.

The stone or stone-like material may have a Knoop hardness of more than 130, preferably more than 135 or 140. The material may thus comprise such as limestone, sandstone, marble, slate, granite, concrete or terrazzo.

The fluid may be a liquid, such as water, or a gas, such as air. For example, water is normally used for wetting the surfaces and/or for cooling down the grinding head and/or the grinding machine. As another option, the fluid may be an aerosol.

As one option, the resilient member may be arranged inside the space.

As another option, the resilient member may be arranged outside the space.

The resilient member may be hollow, the pressurized fluid source may be operatively connected to supply the pressurized fluid to an interior of the resilient member and the resilient member may be resiliently expandable upon supply of said fluid.

The hollow member may comprise a tubular body.

The tubular body can be arranged inside the hood by taking a limited space. Thus, the floor grinding machine with the hollow member can still be built compact.

The hollow member may be arranged on, or forms part of a wall of the hood.

For example, the resilient member may form part of an inwardly, towards the space, facing wall of the hood.

The hollow member, or part of it, may e.g. form an inwardly facing lining of the hood. As another option, the hood, or part of it, may be made of a resilient material, and thus the hood may form at least part of the hollow member.

The hollow member may be arranged along an inner surface of the hood. It is beneficial since the grinding residues accumulated along the inner surface of the hood can be effectively removed by expansion of the hollow member.

The hollow member may extend at least 40 %, preferably at least 50 %, at least 60 %, at least 70 % or at least 80 %, of an inner circumference of the hood.

The hollow member may be expandable so as to provide a dimensional change, in at least one direction, of at least 1 %, preferably at least 2 %, at least 5 % or at least 10 %, upon supply of said fluid.

The dimensional change of the hollow member can provide a force which is easy to remove grinding residues, such as a block of concrete or cement, being attached to and/or being closed to the hollow member.

The hollow member may be arranged at a transition portion between an upper horizontal portion of the hood and a downwardly extending edge portion of the hood.

The transition portion between the upper horizontal portion and the downwardly extending edge portion of the hood can be difficult to reach without disassembling the grinding head case from the hood. Thus, it is difficult to timely remove the grinding residues accumulated at the transition portion. However, the hollow member being arranged at a transition portion can remove the residues of the transition portion without disassembling the machine, which is convenient.

The hollow member may comprise at least one aperture for allowing the fluid to escape.

Such aperture may be sized and adapted to provide a restriction of the flow, such that part of the pressure inside the hollow member may be retained while some fluid is allowed to escape.

Besides the expansion of the hollow member, the fluid from the aperture can also be used to clean the inside of the hood and the outside of the casing. Additionally, the fluid can also be used to wetting the surface being grinded and/or polished, and/or to decrease the temperature of the grinding head.

The aperture may be substantially closed when the hollow member is at a normal ambient pressure, and opened when pressurized by supply of said fluid from inside of the hollow member.

"Substantially closed" means that the fluid escaped from the aperture is at most 10%, preferably at most 5%, at most 3%, or at most 1% of the fluid flew through a portion of the hollow member comprising the aperture.

"A normal ambient pressure" means an atmospheric pressure, e.g. a normal atmosphere.

A plurality of apertures may be arranged on the hollow member along a circumferential direction of the hood.

By arranging the apertures along the circumferential direction of the hood, the fluid escaping from the plurality of apertures can rinse different portions of the inside of the hood. Thus, more residues can be removed and a better cleaning effect can be achieved.

The aperture may be a slit. For example, the aperture may be formed as a through-going cut in a wall forming the hollow member, such that the aperture is normally closed and opens only on pressurization of the hollow member. Such a slit is easy and low-cost to manufacture.

The slit may extend along a longitudinal direction of the hollow member.

Alternatively, the slit may extend along a direction which is non-parallel with the longitudinal direction of the hollow member.

For example, the slit may extend transversely of the longitudinal direction of the hollow member, or at any angle, such as at 0°-90° to the longitudinal direction.

The floor grinding machine may further comprise a nozzle operatively connected to the hollow member to receive said fluid and to spray the same.

The nozzle and the hollow member can share the same fluid source, which simplify the construction of the floor grinding machine. Additionally, if only one water tank onboard is needed, the weight of the machine can be reduced.

The nozzle may be arranged outside of the grinding head hood such that the nozzle may spray in a direction toward the floor surface.

The resilient member may comprise a closure which is biased towards a position where it closes an aperture, and wherein the resilient member may be movable to allow fluid to flow through the aperture on supply of said pressurized fluid.

The floor grinding machine may further comprise a hollow member, an interior of which may be connected to the pressurized fluid supply and whereby the aperture is arranged in a wall of the hollow member.

According to a second aspect, there is provided a method of operating a floor grinding machine for grinding floor surfaces of stone or stone-like material, comprising providing a resilient member on a grinding head of the floor grinding machine, and applying a pressurized fluid to the resilient member such that the resilient member moves or deforms, thereby releasing grinding residues accumulated on or in a vicinity of the resilient member.

By providing a resilient member,, the grinding residues accumulated inside or on the hood can be easily cleaned without disassembling the hood. Further, the residues can be frequently cleaned such that the negative influences caused by the residues can be alleviated.

The resilient member may be a hollow expandable member, and applying the pressurized fluid may comprise causing the resilient member to expand.

The method may further comprise feeding the fluid through at least one aperture of the resilient member, such that the fluid is allowed to exit from the resilient member.

The resilient member may comprise a closure of a hollow member, and the pressurized fluid may be applied to an interior of the hollow member, such that the closure is moved away from an aperture of the hollow member, whereby the fluid is allowed to exit from the hollow member.

The resilient member may be arranged inside a hood enclosing the grinding head.

### Brief description of the drawings

Fig. 1 is a schematic perspective view from behind of a floor grinding machine, in which the concepts according to the present disclosure may be applied.
Fig. 2 is a schematic perspective view of a grinding head with a fluid supplied into a space inside of a grinding head hood.
Fig. 3 is a schematic view of a tubular body of a hollow member.
Figs 4a-4b schematically illustrate a hollow member having a closure -.

### Detailed description

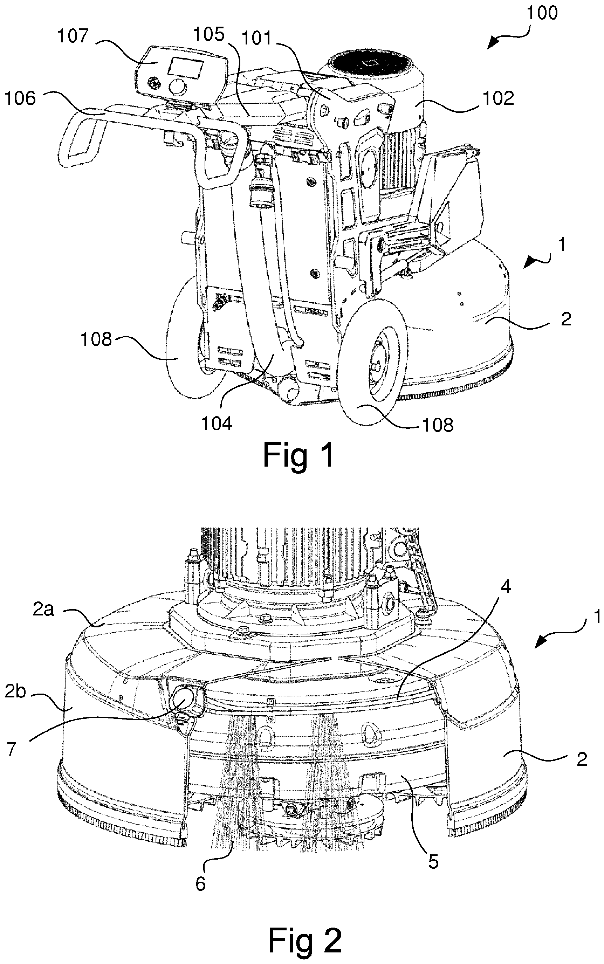

Fig. 1 schematically illustrates a floor grinding machine 100. The grinding machine 100 comprises a machine frame 101 which supports a grinding head 1 and a motor 102. The grinding head 1 is driven by the motor 102 to rotate.

The grinding head 1 may comprise a grinding head hood 2, which may be arranged to enclose the grinding head casing 5. The grinding head casing 5 may be rotatable inside the hood 2.

The hood 2 may contain grinding residues which can be readily collected by e.g. a collection device as will be further described.

The machine 100 may thus further comprise a collection device for collecting grinding residues, such as dust, water and the like. The collection device may comprise a hood connector, such that a space enclosed by the hood is in fluid connection with a dust collector, and optionally a channel, such as a hose or a pipe 104. A hose 104 leading to the dust collector, such as a vacuum cleaner, may be directly connectable to the hood connector, or to the channel.

The machine 100 may further comprise a handle frame 105 extending from an upper rear portion of the machine frame 101. The handle frame 105 may support a handle 106 for a user to grip and/or steer the machine 100, and optionally a user interface 107.

The user interface 107 may comprise an output device, such as a display, which may be a touch screen, for displaying information. The user interface may further comprise one or more input devices, such as a touch screen, buttons, knobs and/or a keyboard for the user to control the machine 100.

The machine 100 may be supported by wheels, such as by a pair of coaxial wheels 108. The wheels may provide part of the support, with additional, or even most, support provided by the grinding head 1.

The wheels may be freely rotatable, whereby the machine 100 may be propelled entirely by being pushed and/or pulled by the user.

As another option, the wheels may be driven by one or more motors. For example, the wheels may be individually drivable, whereby steering of the machine 100 by e.g. radio control may be enabled.

The machine 100 may comprise a control unit, which contains functionality for controlling the machine 100 and/or feeding back information, such as setting a speed of the rotating discs, and reporting a temperature of grinding discs.

The grinding head 1 as illustrated herein is formed as a planetary type grinding head, i.e. the grinding head casing 5 is rotatable relative to the machine frame 101, and in turn carries two or more grinding disks, each of which being rotatable relative to a grinding head casing 5.

The grinding head hood 2 may define a space in which the grinding casing 5 is rotatable.

The machine 100 comprises a hollow and resilient member 4, arranged in the space, and a pressurized fluid source 50, operatively connected to the hollow member 4 to supply said pressurized fluid 6. The hollow member 4 is resiliently expandable upon supply of said fluid 6. In the following description, the fluid will be described as water, which is what is normally used. However, other types of fluids, including liquids and gases, may be used.

The pressurized fluid source 50 may be provided by a connection to a sufficiently pressurized water supply. In the alternative, the pressurized fluid source 50 may be provided by an onboard water tank which may supply water via a pump. As another alternative, a connection to an external water source may be supplemented by an onboard pump.

The hollow member 4 may be expandable so as to provide a dimensional change. The dimensional change may be in at least one direction. The dimensional change may be of at least 5% in said direction, upon supply of said fluid 6. The change may be of at least 10%, at least 20% or at least 30%.

The change of the hollow member 4 may be decreased upon a decreased pressure of the supplied pressurized fluid. The change may be decreased upon a stop of the supply of the pressurized fluid 6.

The hollow member 4 may be made of an extensible material, such as a polymer or resin. The hollow member 4 may be made of a flexible material, such as rubber.

The hollow member 4 may comprise a tubular body, as illustrated in Figs. 2-3. As shown in Fig. 2, the tubular body may be arranged along an inner surface of the hood 2.

The hollow member 4 may be arranged at a transition portion between an upper horizontal portion 2a of the hood 2 and a downwardly extending edge portion 2b of the hood 2.

The hollow member 4 may extend at least 40 %, preferably at least 50 %, at least 60 %, at least 70 % or at least 80%, of an inner circumference of the hood 2.

A plurality of hollow members 4 may be arranged in the space. Each of them may be individually supplied by a pressurized fluid source 50. Such plurality of hollow members 4 may be spaced apart from each other in the space. They may be arranged along the inner circumference of the hood 2. Alternatively, at least two of the hollow members 4 may be overlapped with each other.

The hollow member 4 may comprise at least one aperture 3 for allowing the fluid 6 to escape.

The aperture 3 may be substantially closed when the hollow member 4 is at a normal ambient pressure. The aperture 3 may be opened when pressurized by supply of said fluid 6 from inside of the hollow member 4.

The aperture 3 may be provided with a lid. The lid may be arranged to block the aperture to isolate the inside of the hollow member 4 from outside. The lid may be pressurized to open by the supply of said fluid 6 from the inside of the hollow member 4.A plurality of apertures 3 may be arranged on the hollow member 4 along a circumferential direction of the hood 2.

The aperture 3 may be a slit. The slit may extend along a longitudinal direction of the hollow member 4. Such a slit may be openable, on supply of the fluid, by less than 2 mm, preferably less than 1 mm or less than 0.5 mm.

The machine 100 may comprise a nozzle 7 operatively connected to the hollow member 4 to receive said fluid 6 and to spray the same.

The nozzle 7 may be arranged outside of the hood 2 such that the nozzle 7 sprays in a direction substantially parallel to a forward moving direction of the machine 100.

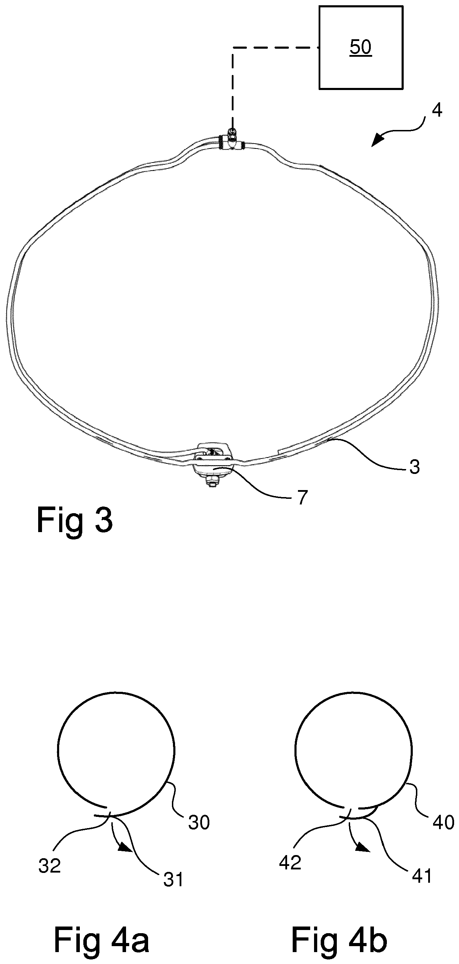

Referring to Fig. 4a, there is disclosed a hollow member 30, which may be formed of a material that is flexible, whereby a portion of the hollow member provides a closure portion 31 of an aperture 32. Hence, the closure portion 31 is integrated with the hollow member 30.

The closure 31 may be biased towards a closed position, i.e. a position wherein the aperture 32 is effectively closed by the closure portion 31.

When supplying a pressurized fluid to the hollow member 30, e.g. as described above, the fluid pressure will cause the closure portion 31 to move and thus to open the aperture, such that fluid may escape.

Accordingly, the movement of the closure portion 31 may cause grinding residues accumulated on or in the vicinity of the hollow member 30 to crack and become more easily released, while fluid may be supplied to e.g. an inside of the hood 2.

Fig. 4b discloses another hollow member 40, which may be formed of an effectively rigid material, such as metal, wherein a closure member 41 is provided as a separate part, which may be attached to the hollow member 40, such that it is biased towards the hollow member and resiliently movable when the hollow member is pressurized, such that fluid is allowed to escape through the aperture 42, analogously with what was disclosed with reference to Fig. 4a.

It is recognized that the present device may be arranged on an inside of the hood 2, as described above, so as to supply the fluid to the inside of the hood 2, or to an outside of the hood 2, whereby the fluid is supplied on the outside of the hood 2.

The fluid may be supplied towards the floor surface, towards a wall of the hood 2 or towards the grinding head 1.

## Claims

1. A floor grinding machine (100) for grinding floor surfaces of stone or stone-like material, the machine comprising:
a machine frame (101),
a grinding head (1), supported by and being rotatable relative to the machine frame (101), and
a grinding head hood (2), which defines a space in which the grinding head (1) is rotatable,
**characterised by**
a resilient member (4), and
a pressurized fluid source (50), operatively connected to the resilient member (4) to supply said pressurized fluid (6),
whereby the resilient member (4), or a portion thereof, is resiliently movable or expandable upon supply of said fluid (6), enabling grinding residues accumulated on or in a vicinity of the resilient member (4) to be released upon supply of said fluid (6).

2. The floor grinding machine (100) as claimed in claim 1, wherein the resilient member is hollow and preferably comprises a tubular body, the pressurized fluid source (50) is operatively connected to supply the pressurized fluid to an interior of the resilient member (4) and the resilient member (4) is resiliently expandable upon supply of said fluid.

3. The floor grinding machine (100) as claimed in claim 2, wherein the hollow member (4) is arranged on, or forms part of, a wall of the hood (2) and/or wherein the hollow member (4) is arranged along an inner surface of the hood (2).

4. The floor grinding machine (100) as claimed in claim 2 or 3, wherein the hollow member (4) is arranged at a transition portion between an upper horizontal portion (2a) of the hood (2) and a downwardly extending edge portion (2b) of the hood (2).

5. The floor grinding machine (100) as claimed in any one of claims 2-4, wherein the hollow member (4) comprises at least one aperture (3) for allowing the fluid to escape.

6. The floor grinding machine (100) as claimed in claim 5, the aperture (3) is substantially closed when the hollow member (4) is at a normal ambient pressure, and opened when pressurized by supply of said fluid (6) from inside of the hollow member (4).

7. The floor grinding machine (100) as claimed in claim 5 or 6, wherein a plurality of apertures (3) are arranged on the hollow member (4) along a circumferential direction of the hood (2).

8. The floor grinding machine (100) as claimed in any one of the claims 5-7, wherein the aperture (3) is a slit.

9. The floor grinding machine (100) as claimed in claim 8, wherein the slit is openable less than 2 mm, preferably less than 1 mm or less than 0.5 mm in a direction across a longitudinal direction of the slit, on supply of the fluid.

10. The floor grinding machine (100) as claimed in claim 8 or 9, wherein the slit (3) extends along a longitudinal direction of the hollow member (4), and/or wherein the slit (3) extends along a direction which is non-parallel with the longitudinal direction of the hollow member (4)..

11. The floor grinding machine (100) as claimed in claim 1, wherein the resilient member comprises a closure (31, 41) which is biased towards a position where it closes an aperture (32, 42), and wherein the resilient member (4) is movable to allow fluid to flow through the aperture (32, 42) on supply of said pressurized fluid.

12. The floor grinding machine (100) as claimed in claim 11, further comprising a hollow member (30, 40), an interior of which is connected to the pressurized fluid supply (50) and whereby the aperture (32, 42) is arranged in a wall of the hollow member (30 40).

13. A method of operating a floor grinding machine (100) for grinding floor surfaces of stone or stone-like material, **characterised by**:
providing a resilient member (4) on a grinding head (1) of the floor grinding machine (100), and
applying a pressurized fluid to the resilient member (4) such that the resilient member (4) moves or deforms, thereby releasing grinding residues accumulated on or in a vicinity of the resilient member (4).

14. The method as claimed in claim 13, wherein the resilient member (4) is a hollow expandable member, and wherein applying the pressurized fluid comprises causing the resilient member (4) to expand.

15. The method as claimed in claim 13 or 14, further comprising feeding the fluid through at least one aperture (3) of the resilient member (4), such that the fluid is allowed to exit from the resilient member (4).

## Patentansprüche

1. Bodenschleifmaschine (100) zum Schleifen von Bodenoberflächen aus Stein oder steinähnlichem Material, wobei die Maschine umfasst:
ein Maschinengestell (101),
einen Schleifkopf (1), der durch das Maschinengestell (101) getragen und relativ zu diesem drehbar ist, und
eine Schleifkopfhaube (2), die einen Raum definiert, in dem der Schleifkopf (1) drehbar ist,
**gekennzeichnet durch**
ein elastisches Element (4), und
eine Druckfluidquelle (50), die mit dem elastischen Element (4) wirkverbunden ist, um das Druckfluid (6) zuzuführen,
wobei das elastische Element (4) oder ein Abschnitt davon bei Zufuhr des Fluids (6) elastisch beweglich oder ausdehnbar ist, wobei ermöglicht wird, dass Schleifrückstände, die sich auf oder in einer Nähe zu dem elastischen Element (4) angesammelt haben, bei Zufuhr des Fluids (6) gelöst werden.

2. Bodenschleifmaschine (100) nach Anspruch 1, wobei das elastische Element hohl ist und vorzugsweise einen rohrförmigen Körper umfasst, wobei die Druckfluidquelle (50) wirkverbunden ist, um das Druckfluid zu einem Inneren des elastischen Elements (4) zuzuführen, und das elastische Element (4) bei Zufuhr des Fluids elastisch ausdehnbar ist.

3. Bodenschleifmaschine (100) nach Anspruch 2, wobei das hohle Element (4) an einer Wand der Haube (2) angeordnet ist oder einen Teil davon bildet und/oder wobei das hohle Element (4) entlang einer Innenfläche der Haube (2) angeordnet ist.

4. Bodenschleifmaschine (100) nach Anspruch 2 oder 3, wobei das hohle Element (4) an einem Übergangsabschnitt zwischen einem oberen horizontalen Abschnitt (2a) der Haube (2) und einem sich nach unten erstreckenden Randabschnitt (2b) der Haube (2) angeordnet ist.

5. Bodenschleifmaschine (100) nach einem der Ansprüche 2-4, wobei das hohle Element (4) mindestens eine Öffnung (3) umfasst, um ein Entweichen des Fluids zu ermöglichen.

6. Bodenschleifmaschine (100) nach Anspruch 5, wobei die Öffnung (3) im Wesentlichen geschlossen ist, wenn das hohle Element (4) bei einem normalen Umgebungsdruck ist, und geöffnet ist, wenn es durch Zufuhr des Fluids (6) von der Innenseite des hohlen Elements (4) druckbeaufschlagt wird.

7. Bodenschleifmaschine (100) nach Anspruch 5 oder 6, wobei eine Mehrzahl von Öffnungen (3) an dem hohlen Element (4) entlang einer Umfangsrichtung der Haube (2) angeordnet sind.

8. Bodenschleifmaschine (100) nach einem der Ansprüche 5-7, wobei die Öffnung (3) ein Schlitz ist.

9. Bodenschleifmaschine (100) nach Anspruch 8, wobei sich der Schlitz weniger als 2 mm, vorzugsweise weniger als 1 mm oder weniger als 0,5 mm, in einer Richtung über eine Längsrichtung des Schlitzes bei Zufuhr des Fluids öffnen lässt.

10. Bodenschleifmaschine (100) nach Anspruch 8 oder 9, wobei sich der Schlitz (3) entlang einer Längsrichtung des hohlen Elements (4) erstreckt und/oder wobei sich der Schlitz (3) entlang einer Richtung erstreckt, die nicht parallel zu der Längsrichtung des hohlen Elements (4) ist.

11. Bodenschleifmaschine (100) nach Anspruch 1, wobei das elastische Element einen Verschluss (31, 41) umfasst, der hin zu einer Position vorgespannt ist, an der er eine Öffnung (32, 42) verschließt, und wobei das elastische Element (4) beweglich ist, um bei Zufuhr des Druckfluids zu ermöglichen, dass Fluid durch die Öffnung (32, 42) fließt.

12. Bodenschleifmaschine (100) nach Anspruch 11, ferner umfassend ein hohles Element (30, 40), von dem ein Inneres mit der Druckfluidzufuhr (50) verbunden ist, und wobei die Öffnung (32, 42) in einer Wand des hohlen Elements (30, 40) angeordnet ist.

13. Verfahren zum Betreiben einer Bodenschleifmaschine (100) zum Schleifen von Bodenoberflächen aus Stein oder steinähnlichem Material, **gekennzeichnet durch**:
Bereitstellen eines elastischen Elements (4) an einem Schleifkopf (1) der Bodenschleifmaschine (100), und
Aufbringen eines Druckfluids auf das elastische Element (4) derart, dass sich das elastische Element (4) bewegt oder verformt, wodurch Schleifrückstände gelöst werden, die sich auf oder in einer Nähe zu dem elastischen Element (4) angesammelt haben.

14. Verfahren nach Anspruch 13, wobei das elastische Element (4) ein hohles ausdehnbares Element ist, und wobei das Aufbringen des Druckfluids Veranlassen des elastischen Elements (4), sich auszudehnen, umfasst.

15. Verfahren nach Anspruch 13 oder 14, ferner umfassend Zuführen des Fluids durch mindestens eine Öffnung (3) des elastischen Elements (4) derart, dass ermöglicht wird, dass das Fluid aus dem elastischen Element (4) austritt.

## Revendications

1. Machine à poncer le sol (100) destinée à poncer des surfaces de sol en pierre ou en matériau de type pierre, la machine comprenant :
un châssis de machine (101),
une tête de ponçage (1), supportée par et pouvant être mise en rotation par rapport au châssis de machine (101), et
un capot de tête de ponçage (2), qui définit un espace dans lequel la tête de ponçage (1) peut être mise en rotation,
**caractérisée par**
un élément élastique (4), et
une source de fluide sous pression (50), fonctionnellement raccordée à l'élément élastique (4) pour fournir ledit fluide sous pression (6),
dans laquelle l'élément élastique (4), ou une partie de celui-ci, est déplaçable ou extensible de façon élastique lors de la fourniture dudit fluide (6), permettant à des résidus de ponçage accumulés sur ou à proximité de l'élément élastique (4) d'être libérés lors de la fourniture dudit fluide (6).

2. Machine à poncer le sol (100) selon la revendication 1, dans laquelle l'élément élastique est creux et comprend de préférence un corps tubulaire, la source de fluide sous pression (50) est fonctionnellement raccordée pour fournir le fluide sous pression à un intérieur de l'élément élastique (4) et l'élément élastique (4) est extensible de façon élastique lors de la fourniture dudit fluide.

3. Machine à poncer le sol (100) selon la revendication 2, dans laquelle l'élément creux (4) est disposé sur, on forme une partie, d'une paroi du capot (2), et/ou dans laquelle l'élément creux (4) est disposé le long d'une surface interne du capot (2).

4. Machine à poncer le sol (100) selon la revendication 2 ou 3, dans laquelle l'élément creux (4) est disposé au niveau d'une partie de transition entre une partie horizontale supérieure (2a) du capot (2) et une partie de bord s'étendant vers le bas (2b) du capot (2).

5. Machine à poncer le sol (100) selon l'une quelconque des revendications 2-4, dans laquelle l'élément creux (4) comprend au moins une ouverture (3) pour permettre au fluide de s'échapper.

6. Machine à poncer le sol (100) selon la revendication 5, dans laquelle l'ouverture (3) est sensiblement fermée quand l'élément creux (4) est à une pression ambiante normale, et ouverte quand il est mis sous pression par la fourniture dudit fluide (6) depuis l'intérieur de l'élément creux (4).

7. Machine à poncer le sol (100) selon la revendication 5 ou 6, dans laquelle une pluralité d'ouvertures (3) sont disposées sur l'élément creux (4) le long d'une direction circonférentielle du capot (2).

8. Machine à poncer le sol (100) selon l'une quelconque des revendications 5-7, dans laquelle l'ouverture (3) est une fente.

9. Machine à poncer le sol (100) selon la revendication 8, dans laquelle la fente peut être ouverte sur moins de 2 mm, de préférence moins de 1 mm ou moins de 0,5 mm dans une direction à travers une direction longitudinale de la fente, lors de la fourniture du fluide.

10. Machine à poncer le sol (100) selon la revendication 8 ou 9, dans laquelle la fente (3) s'étend le long d'une direction longitudinale de l'élément creux (4), et/ou dans laquelle la fente (3) s'étend le long d'une direction qui n'est pas parallèle à la direction longitudinale de l'élément creux (4).

11. Machine à poncer le sol (100) selon la revendication 1, dans laquelle l'élément élastique comprend une fermeture (31, 41) qui est rappelée vers une position où elle ferme une ouverture (32, 42), et dans laquelle l'élément élastique (4) est mobile pour permettre à un fluide de s'écouler à travers l'ouverture (32, 42) lors de la fourniture dudit fluide sous pression.

12. Machine à poncer le sol (100) selon la revendication 11, comprenant en outre un élément creux (30, 40), dont un intérieur est raccordé à la source de fluide sous pression (50), et dans laquelle l'ouverture (32, 42) est disposée dans une paroi de l'élément creux (30, 40).

13. Procédé de fonctionnement d'une machine à poncer le sol (100) destinée à poncer des surfaces de sol en pierre ou en matériau de type pierre, **caractérisé par** :
la mise en place d'un élément élastique (4) sur une tête de ponçage (1) de la machine à poncer le sol (100), et
l'application d'un fluide sous pression à l'élément élastique (4) telle sorte que l'élément élastique (4) se déplace ou se déforme, libérant ainsi des résidus de ponçage accumulés sur ou à proximité de l'élément élastique (4).

14. Procédé selon la revendication 13, dans lequel l'élément élastique (4) est un élément creux extensible, et dans lequel l'application du fluide sous pression comprend l'extension de l'élément élastique (4).

15. Procédé selon la revendication 13 ou 14, comprenant en outre la circulation du fluide à travers au moins une ouverture (3) de l'élément élastique (4), de telle sorte que le fluide peut sortir de l'élément élastique (4) .
